# FASCICULE DE BREVET EUROPEEN

(11) **EP 3 059 164 B1**
(45) Date de publication et mention de la délivrance du brevet: **03.04.2019**
(21) Numéro de dépôt: 16156081.8
(22) Date de dépôt: 17.02.2016
(51) Int. Cl.: F16F 6/00, B64C 25/50, B64C 25/62

(54) **ATTERRISSEUR D'AERONEF COMPRENANT UNE TIGE LINEAIRE TELESCOPIQUE**
LANDEVORRICHTUNG FÜR LUFTFAHRZEUG, DIE EINEN LINEAREN TELESKOPSTAB UMFASST
AIRCRAFT LANDING GEAR COMPRISING A TELESCOPING LINEAR ROD

(30) Priorité: 18.02.2015 FR 1551371
(43) Date de publication de la demande: 24.08.2016
(73) Titulaire: Safran Landing Systems, 78140 Vélizy-Villacoublay (FR)
(72) Inventeur: NECCI, Carlo, 78140 VELIZY-VILLACOUBLAY (FR)
(74) Mandataire: Parzy, Benjamin Alain

(56) Documents cités:
- EP-A1- 0 391 066
- DE-A1-102011 113 918
- DE-C- 903 303
- GB-A- 1 530 918
- US-A- 3 770 290
- US-A1- 2014 015 180
- US-B2- 8 793 052

## Description

### DOMAINE DE L'INVENTION

L'invention concerne essentiellement le domaine des atterrisseurs d'aéronef et en particulier d'atterrisseur comportant une tige linéaire télescopique, c'est-à-dire une tige télescopique capable de s'étendre ou se rétracter suivant un axe principal de la tige.

### ART ANTERIEUR

Il est connu du document WO2013117902 (A1) un atterrisseur d'aéronef comprenant une tige linéaire télescopique s'étendant entre une première extrémité de tige comprenant des moyens d'attachement de la tige à une structure principale de l'aéronef et une seconde extrémité de tige portant un axe de roues de l'atterrisseur. Cette tige linéaire télescopique comprend des parties de la tige adaptées à coulisser les unes par rapport aux autres le long d'un axe principal de symétrie de la tige afin de d'étendre ou rétracter la tige télescopique.La position relative entre ces première et deuxième parties de la tige de l'art antérieur est déterminée à l'aide d'un amortisseur hydraulique associé à un compas empêchant la rotation relative entre les première et deuxième parties de la tige. Un tel atterrisseur, du fait de la présence du compas, peut présenter un poids important. Le document DE102011113918A1 divulgue un amortisseur magnétique.

### OBJET DE L'INVENTION

Un objet de la présente invention est de fournir un atterrisseur d'aéronef alternatif.

### RESUME DE L'INVENTION

En vue de la réalisation de cet objet, il est proposé selon la revendication 1 un atterrisseur d'aéronef comprenant une tige linéaire télescopique s'étendant entre une première extrémité de tige comprenant des moyens d'attachement de la tige à une structure principale de l'aéronef et une seconde extrémité de tige portant un axe de roues de l'atterrisseur, la tige linéaire télescopique comprenant des parties de la tige adaptées à coulisser les unes par rapport aux autres le long d'un axe principal de symétrie de la tige afin de d'étendre ou rétracter la tige télescopique.

Cet atterrisseur selon l'invention est essentiellement caractérisé en ce qu'il comprend en outre :
- un premier jeu d'aimants permanents fixés à une première desdites parties de la tige ;
- un deuxième jeu d'aimants permanents fixés à une deuxième desdites parties de la tige ;
les premier et second jeux d'aimants permanents étant agencés de manière à générer une force de répulsion magnétique entre la première partie de la tige et la deuxième partie de la tige et de manière à maintenir un premier espace annulaire s'étendant autour de l'une des première ou deuxième parties de tige et situé entre la première partie de la tige et la deuxième partie de la tige.

Par espace annulaire on entend un volume périphérique entourant l'une des dites première ou deuxième parties de la tige et situé entre ces parties de la tige. Cette définition d'espace annulaire inclue par exemple un espace cylindrique creux, ou un espace périphérique en forme d'étoile comme cela apparait dans les modes de réalisation illustrés par les figures ci-après.

Grâce à cette invention, on guide le coulissement relatif entre les première et deuxième parties de la tige à l'aide d'une force de répulsion magnétique qui maintient un espace annulaire entre ces première et deuxième parties coulissantes de la tige télescopique et s'oppose ainsi au contact entre ces première et deuxième partie de la tige.

Ce guidage sans contact minimise l'usure lié au frottement entre les parties coulissantes de la tige télescopique et permet d'éviter l'utilisation des lubrifiants.

L'invention permet de se passer de coussinets de frottement et joints de frottement adaptés à guider le coulissement linéaire relatif entre les parties de tige. Bien entendu de tels coussinets peuvent être utilisés en combinaison avec les moyens de guidage magnétique mais afin de réaliser un guidage mécanique par frottement uniquement si les première et deuxième parties de tige sont soumise à un effort mécaniques trop importants dépassant un effort maximum admissible prédéterminé. Ainsi, tant que la tige est soumise à un effort inférieur audit effort maximum admissible prédéterminé seul le guidage magnétique est utilisé.

L'invention permet aussi de se passer de moyens hydrauliques nécessaires à la lubrification de tels coussinets ou joints.

L'atterrisseur selon l'invention est ainsi moins sensible à l'usure.

Idéalement, le premier jeu d'aimants permanents est fixé directement sur la première partie de tige et le second jeu d'aimants permanents est aussi fixé directement sur la deuxième partie de la tige. Ceci permet de compacter la tige télescopique tout en minimisant le besoin de pièces d'interface pour l'assemblage d'un jeu d'aimants avec la partie de tige correspondante.

Selon un mode particulier de réalisation de l'invention, chacun des aimants du premier jeu d'aimants permanents est intégré dans la première partie de la tige et chacun des aimants du deuxième jeu d'aimants permanents est intégré dans la deuxième partie de la tige.

Ceci favorise le compactage de la tige selon l'invention puisque chaque jeu d'aimants est intégré dans la matière même d'une partie de la tige.

Selon l'invention, certains au moins des aimants du premier jeu d'aimants permanents sont disposés en vis-à-vis de certains au moins des aimants du deuxième jeu d'aimants permanents de manière à générer un couple magnétique s'opposant au pivotement relatif, selon l'axe principal de symétrie, de la première partie de la tige par rapport à la deuxième partie de la tige.

Ainsi les aimants permanents des premier et second jeux d'aimants sont agencés pour réaliser un guidage magnétique linéaire qui autorise le coulissement relatif des première et deuxième parties de tige l'une par rapport à l'autre et selon l'axe principal de symétrie tout en s'opposant à la rotation relative entre ces première et deuxième parties de la tige l'une par rapport à l'autre et selon l'axe principal de symétrie.

Dans ce mode de réalisation, grâce à des moyens magnétiques et sans contact, l'invention permet de générer un couple s'opposant au pivotement relatif entre les première et seconde parties de tige.

Le fait de réaliser cette fonction via des moyens magnétiques et sans contact, limite le besoin d'implanter des pièces de guidage mécanique telles qu'un compas ou du moins permet de réduire le dimensionnement d'un tel compas. Le risque de disfonctionnement de l'atterrisseur par usure de pièces de frottement est ainsi minimisé.

Selon l'invention,
lesdits aimants du premier jeu d'aimants permanents qui sont disposés de manière à générer ledit couple magnétique forment des branches d'une étoile s'étendant autour de l'axe principal de symétrie et certains au moins des aimants du deuxième jeu d'aimants permanents sont disposés entre certaines des branches de l'étoile pour générer des forces de répulsion magnétique vis-à-vis d'aimants du premier jeu d'aimants permanents qui forment des branches de l'étoile.

Le fait d'intercaler un aimant permanent porté par une partie coulissante de la tige entre deux autres aimants permanents qui forment des branches de l'étoile portée par une autre partie coulissante de la tige permet de générer des forces de répulsion magnétiques de part et d'autre de l'aimant placé entre les branches. Ces forces de répulsion s'équilibrent et favorisent le positionnement de l'aimant dans une position neutre à distance des deux branches de l'étoile. Lorsque cet aimant s'éloigne de sa position neutre, le déséquilibre entre les forces de répulsion favorise son retour de l'aimant vers sa position neutre, entre les branches de l'étoile.

Selon un mode particulier de réalisation de l'invention,
la tige linéaire télescopique comprend en outre au moins un premier électro-aimant adapté à générer une première force de répulsion axiale qui s'oppose au rapprochement relatif entre les première et deuxième parties de tige selon une direction parallèle audit axe principal de symétrie de la tige.

Avec ce mode de réalisation, on a un effet de répulsion magnétique qui permet d'agir sur le coulissement relatif entre les première et deuxième parties de la tige télescopique selon l'axe principal de symétrie de cette tige. Cet effet est utilisable pour contrôler l'extension ou la rétraction de la tige télescopique et/ou pour contrôler l'amortissement d'efforts de compression longitudinale de la tige qui apparaissent par exemple lors de l'atterrissage ou lors du déplacement de l'aéronef sur le sol. Ce mode de réalisation est utile pour obtenir un atterrisseur doté d'un amortisseur de chocs magnétique.

Selon un mode particulier de réalisation de l'invention combiné au précédent, des moyens d'alimentation en électricité dudit au moins un premier électroaimant sont agencés pour faire varier la puissance d'alimentation en électricité dudit au moins un premier électro-aimant de manière à commander le coulissement relatif entre lesdites première et deuxième parties de tige.

Typiquement, en variant la puissance d'alimentation on peut déplacer la position d'équilibre entre les parties de la tige et ainsi allonger ou raccourcir cette tige. Par ailleurs, cette variation de la puissance d'alimentation en électricité permet de changer les caractéristiques de l'amortissement et éventuellement de piloter ces caractéristiques lors du déplacement de l'aéronef sur le sol. On peut ainsi avoir un pilotage des caractéristiques d'amortissement en fonction d'un paramètre de charge de l'aéronef et/ou de confort souhaité et/ou de mesures représentatives du déplacement relatif entre les parties de tiges qui coulissent les unes par rapport aux autres.

Ledit moyen d'alimentation peut être adapté pour commander au moins un premier électro-aimant :
- l'extension ou la rétraction de la tige linéaire télescopique par coulissement relatif entre lesdites première et deuxième parties de tige ; et
- la variation de caractéristiques d'amortissement de du déplacement relatif entre lesdites première et deuxième parties de tige.

Des capteurs tels que des capteurs d'efforts de compression axiale de la tige et/ou de positionnement relatif des première et deuxième parties de tige l'une par rapport à l'autres peuvent être couplés au moyen d'alimentation qui peut réguler l'alimentation en fonction de données captées par certains au moins de ces capteurs. Ainsi, on peut réguler l'alimentation électrique pour respecter une valeur d'allongement prédéterminée de la tige et/ou pour réguler l'amortissement de chocs axiaux appliqués sur la tige.

Selon un mode particulier de réalisation de l'invention,
ledit au moins un premier électro-aimant est assemblé à une extrémité de la première partie de tige, l'atterrisseur comportant en outre un second électro-aimant assemblé à une extrémité de la deuxième partie de tige, ces premier et second électroaimants étant placés en vis-à-vis l'un de l'autre et étant adaptés à générer ensemble ladite première force de répulsion axiale qui s'oppose au rapprochement relatif entre les première et deuxième parties de tige.

On note que lorsque les premier et second électro-aimants sont alimentés simultanément de manière que les pôles magnétiques générés entre ces premier et second électroaimants présentent un seul et même signe de polarité (c'est-à-dire soit positif, soit négatif) alors on constate une répulsion entre ces premier et second électroaimants. Cette force de répulsion qui est orientée selon l'axe de symétrie principal de la tige est soit utilisée pour commander l'extension de la tige d'atterrisseur soit pour réaliser un amortissement d'efforts de compression axiale de la tige selon son axe principal de symétrie.

Selon un mode particulier de réalisation de l'invention,
l'atterrisseur comprend au moins un électro-aimant de commande de rotation agencé pour commander la rotation selon ledit axe principal de symétrie de certaines au moins des première et deuxième parties de la tige par rapport aux moyens d'attachement de la tige à la structure principale de l'aéronef.

Ce mode de réalisation permet de diriger l'aéronef via des moyens électromagnétiques.

Selon ce mode de réalisation, un jeu d'aimants permanents de rotation peut être agencé pour coopérer avec ledit au moins un électro-aimant de commande de rotation pour commander ladite rotation, ce jeu d'aimants permanents de rotation peut être intégré dans l'une au moins des première ou deuxième parties de la tige ou dans un carter fixe entourant la tige sur une partie au moins de sa longueur.

Le fait d'intégrer le jeu d'aimants permanents de rotation à la tige permet de compacter l'atterrisseur puisque l'actionnement en rotation se fait directement sur la tige, sans nécessiter de mécanisme intermédiaire pour transmettre des efforts mécaniques d'un actionneur électromécanique vers la tige.

### BREVE DESCRIPTION DES FIGURES

L'invention sera mieux comprise à la lumière de la description qui suit des modes particuliers de réalisation non limitatifs de l'invention, en référence aux figures des dessins annexés parmi lesquelles :

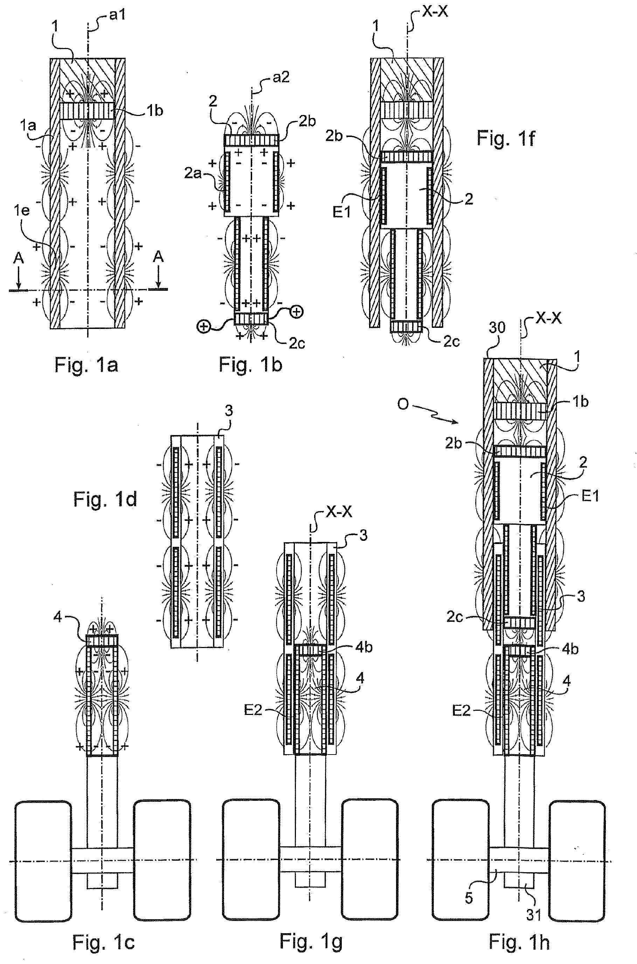

- les figures 1a, 1b, 1c, 1d, sont des éléments constitutifs de la tige d'atterrisseur 0 selon un premier mode de réalisation de l'invention qui est illustrée assemblée à la figure 1h ;
- la figure 1f illustre une étape d'assemblage de la tige d'atterrisseur de la figure 1h où une deuxième partie 2 de la tige est insérée dans un évidement interne d'une première partie 1 de la tige afin d'y coulisser tout en conservant un espace annulaire E1 tout autour de la deuxième partie de tige, entre ces première et seconde parties de la tige 1, 2 ;
- la figure 1g illustre une autre étape d'assemblage de parties 3 et 4 de la tige d'atterrisseur de la figure 1h où une quatrième partie 4 de la tige télescopique est placée à l'intérieur d'une troisième partie 3 tubulaire de la tige télescopique pour y coulisser sans la toucher du fait de l'existence d'un autre espace annulaire E2 s'étendant tout autour de la quatrième partie 4 et entre ces troisième et quatrième parties 3 et 4 ;
- la figure 1 h est une vue assemblée de la tige télescopique selon un premier mode de réalisation de l'invention où les espaces annulaires vides E1 et E2 sont maintenus grâce à des forces de répulsion magnétiques concentriques autour de l'axe de symétrie de la tige X-X ;

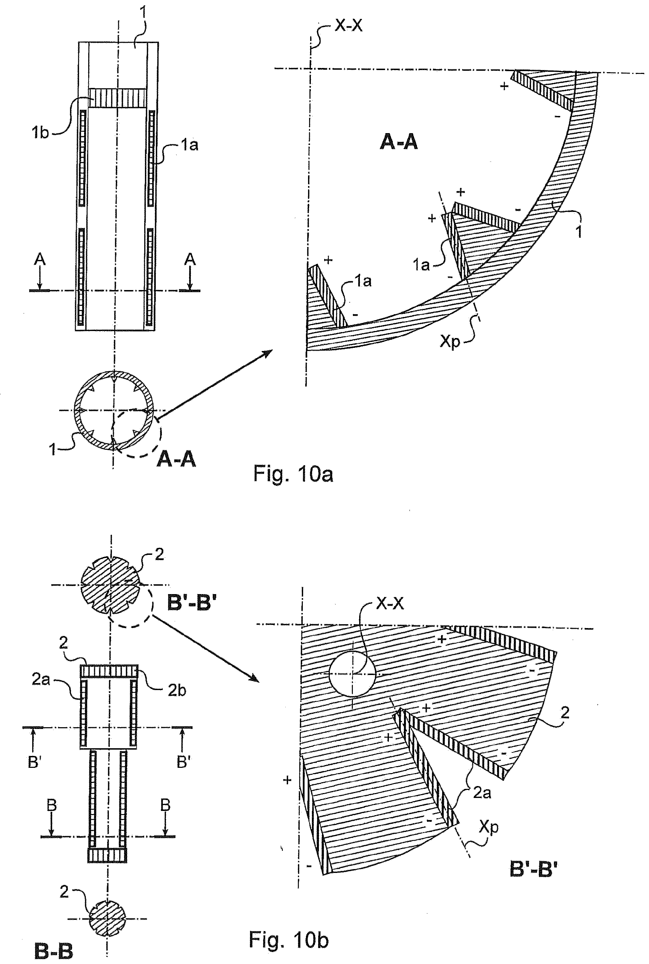

- la figures 10a détaille la première partie 1 de la tige télescopique 0 illustrée à la figure la, on voit sur cette figure 10a une coupe transversale A-A d'une zone tubulaire de cette première partie 1 qui illustre une disposition en étoile des aimants d'un premier jeu d'aimants permanents la pour générer des forces de répulsion magnétiques ;
- la figure 10b détaille la seconde partie 2 de tige télescopique 0 déjà illustrée à la figure 1b, cette seconde partie 2 de tige 0 est conformée pour pouvoir coulisser à l'intérieure de la première partie 1 de tige 0, on voit sur cette figure 10b une vue en coupe selon un plan B'-B' qui illustre une disposition en étoile des aimants du second jeu d'aimants permanents 2a qui sont respectivement disposés pour venir en vis-à-vis des aimants du premier jeu d'aimants permanents 1a de manière à générer des efforts magnétiques de répulsion pour maintenir un espace annulaire vide E1 tout autour de la seconde partie 2 et entre ces parties 1 et 2 ce qui permet d'une part de guider le coulissement linéaire de ces parties 1, 2 l'une par rapport à l'autre et d'autre part de s'opposer au pivotement relatif entre ces parties 1, 2 ;

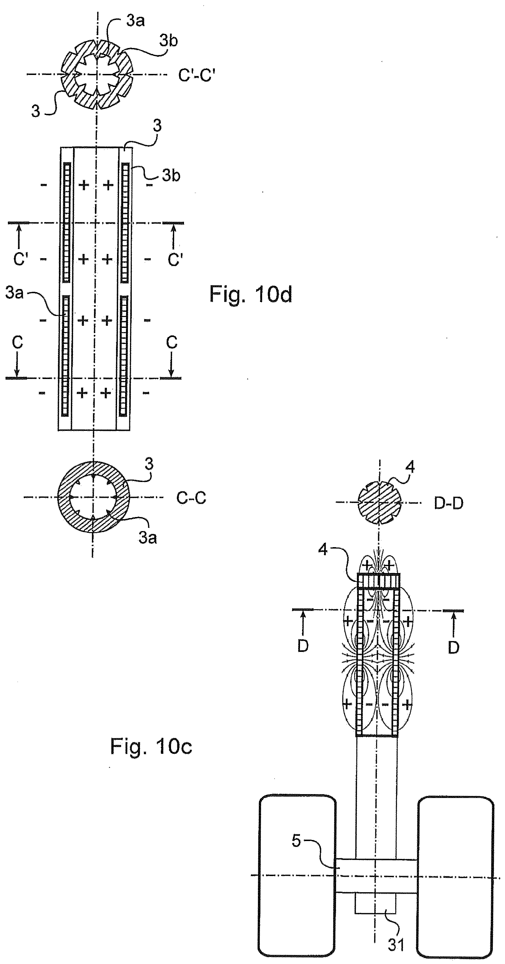

- la figures 10c détaille une quatrième partie 4 télescopique de la tige 0 illustrée à la figure 1h, cette quatrième partie 4 porte un axe de roues 5 de l'atterrisseur situé à la seconde extrémité 31 de la tige 0, on voit sur cette figure 10c une vue en coupe transversale D-D de la quatrième partie de tige 4 sur laquelle des aimants d'un jeu d'aimants permanents porté par cette quatrième partie 4 de tige sont disposés en étoile pour générer des efforts de répulsion magnétique permettant de centrer cette quatrième partie de tige 4 par rapport à au moins une des autres partie 1, 2, 3 de la tige télescopique 0, ce centrage étant réalisé autour de l'axe principal de symétrie X-X de la tige, tout en s'opposant à la rotation relative entre cette quatrième partie 4 de tige et les autres parties de la tige 1, 2, 3 ;
- la figure 10d détaille la troisième partie 3 de la tige télescopique 0 de la figure 1h, comme on le voit sur les coupes transversales C-C et C'-C', cette troisième partie de tige 3 est en forme de tube portant intérieurement un jeu interne 3a d'aimants permanents internes dont les polarités sont orientées pour générer des efforts de répulsion de cette troisième partie 3 de tige vis-à-vis de la quatrième partie 4 de tige qui coulisse dans la troisième partie de tige 3, ainsi que des efforts de répulsion magnétique entre cette troisième partie 3 et la seconde partie 2 qui coulisse aussi dans la troisième partie 3, cette troisième partie 3 de tige porte en outre un jeu d'aimants permanents externe 3b agencés pour guider le coulissement de cette troisième partie 3 vis-à-vis de la première partie de tige 1 dans laquelle elle coulisse, ces jeux internes et externes 3a, 3b d'aimants permanents sont agencés pour s'opposer aux pivotements relatifs de cette troisième partie 3 de tige vis-à-vis des première, seconde et quatrième parties 1, 2, 4 ;

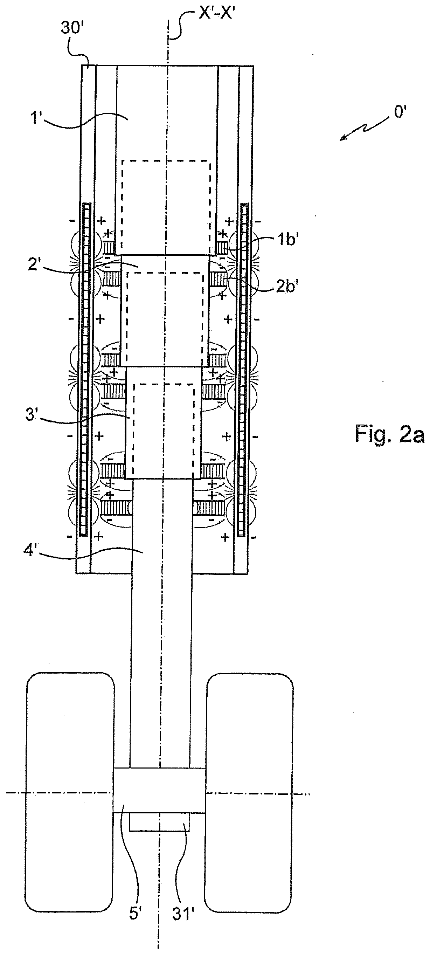

- la figure 2a illustre la tige télescopique linéaire 0' d'atterrisseur selon un second mode de réalisation de l'invention, ici la tige 0' comporte quatre parties télescopiques 1', 2', 3', 4' coulissantes deux à deux sans contact grâce à des efforts de répulsion magnétique qui centrent ces parties de tige 1', 2', 3', 4' autour d'un axe principal de symétrie X'-X' de cette tige 0' ;

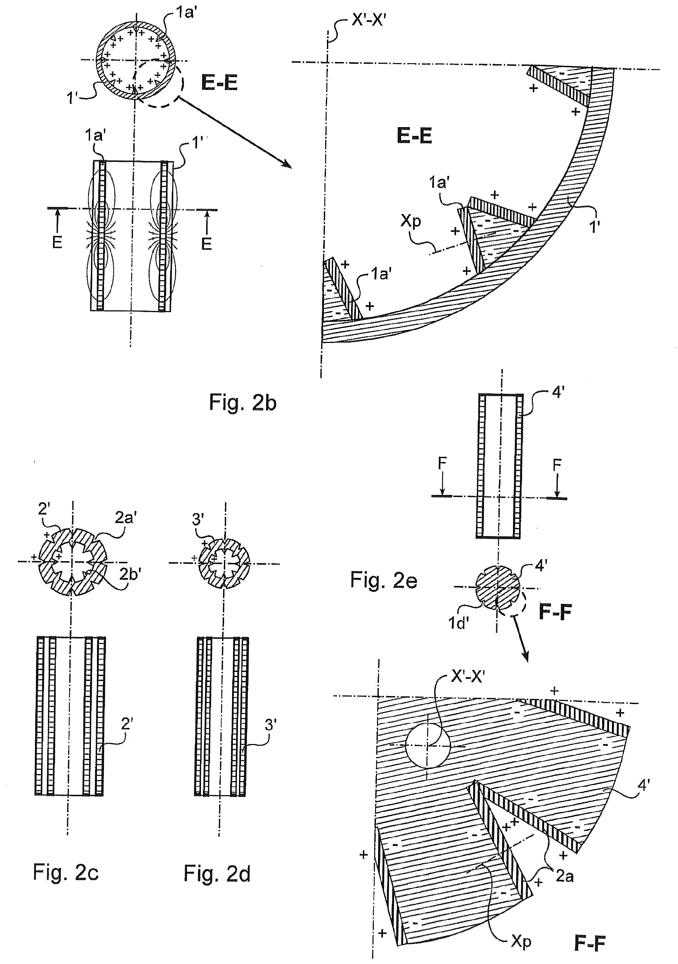

- la figure 2b illustre une première partie 1' de la tige 0' présentée à la figure 2a, la vue en coupe transversale E-E montre un premier jeu d'aimants permanents 1a agencés en étoile pour guider, par répulsion magnétique, une seconde partie 2' de la tige 0' qui coulisse à l'intérieur de la première partie 1' de tige 0', la répulsion magnétique exercée par ce premier jeu d'aimants 1a' est prévue pour s'opposer à la rotation relative entre cette première partie 1' et la seconde partie 2' tout en guidant le coulissement relatif linéaire et sans contact entre ces parties 1', 2' ;
- la figure 2c détaille la deuxième partie 2' de la tige 0' illustrée à la figure 2a, cette deuxième partie 2' est en forme de tube agencé pour coulisser sans pivoter à l'intérieur de la première partie 1' et pour rester centrée par répulsion magnétique à l'intérieur de la première partie 1' sans la toucher ;
- la figure 2d détaille la troisième partie 3' de la tige 0' illustrée à la figure 2a, cette troisième partie 3' est en forme de tube agencé pour coulisser sans pivoter à l'intérieur de la deuxième partie 2' et pour rester centrée par répulsion magnétique à l'intérieur de cette deuxième partie 2' sans la toucher ;
- la figure 2e détaille la quatrième partie 4' de la tige 0' illustrée à la figure 2a, cette quatrième partie est agencée pour coulisser sans pivoter à l'intérieur de la troisième partie 3' et pour rester centrée par répulsion magnétique à l'intérieur de la cette troisième partie 3' sans la toucher, cette troisième partie 3' forme une seconde extrémité 31' de la tige 0' destinée à porter l'axe de roues 5' ;

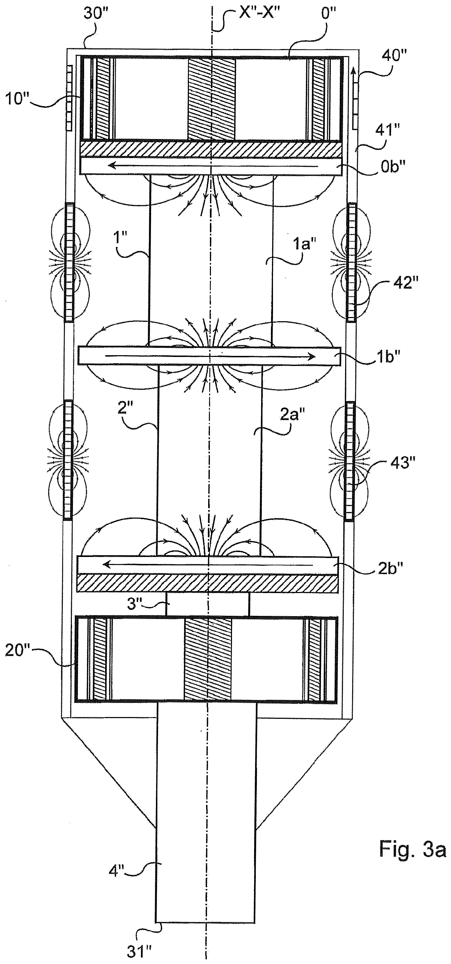

- la figure 3a illustre une tige télescopique linéaire 0" d'atterrisseur selon un troisième mode de réalisation de l'invention, ici la tige 0" comporte trois parties télescopiques 1", 2", 3" coulissantes deux à deux sans contact grâce à des efforts de répulsion magnétique centrant ces parties de tige 1", 2", 3" autour d'un axe principal de symétrie X"-X" de cette tige 0", selon ce mode de réalisation un premier électro-aimant de commande de rotation 10" est intégré à la première partie de tige 1" pour la faire tourner selon son axe de symétrie X"-X" vis-à-vis d'une structure d'aéronef non représentée et un second électro-aimant de commande de rotation 20" est intégré à une quatrième partie terminale 4" de la tige pour faire tourner cette quatrième partie 4" vis-à-vis de la troisième partie de tige 3" ;

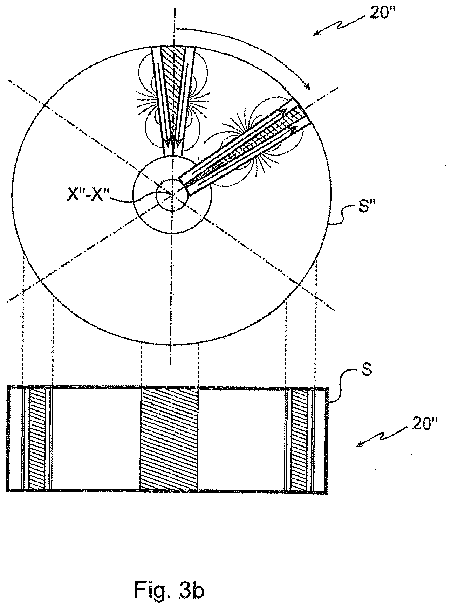

- la figure 3b illustre une vue en coupe transversale et une vue en coupe longitudinale du second électro-aimant de commande de rotation 20" qui est similaire au premier électroaimant 10" en ce qu'il présente des pôles électromagnétiques radiaux intégrés à la tige pour la faire pivoter en fonction de l'alimentation électrique délivrée à cet électro-aimant de commande de rotation.

### DESCRIPTION DETAILLEE DE L'INVENTION

Comme indiqué précédemment, l'invention concerne une tige télescopique linéaire d'atterrisseur d'aéronef 0, 0', 0". La tige est formée de plusieurs partie de tige montées coulissantes les unes par rapport aux autres pour permettre l'extension ou la rétraction de la tige par coulissement relatif entre les parties de tige le long d'un axe principal de symétrie X-X, X'-X', X"-X" de la tige.

Selon le premier mode de réalisation illustré par les figures 1a à 10c, la première partie de tige 1 porte la première extrémité 30 de la tige 0 destinée à être assemblée à une structure de l'aéronef. Cette première partie de tige 1 est en forme de tube creux d'axe X-X pour permettre le passage et le coulissement d'une seconde partie de tige 2 à l'intérieur de cette première partie 1. Un premier jeu d'aimants permanents 1a est intégré à la première partie 1. Ces aimants sont régulièrement disposés tout autour de cette première partie 1. Chacun de ces aimants présente une polarité d'un premier signe, ici positif qui est orientée vers l'intérieur de la première partie de tige et une polarité d'un second signe contraire au premier, ici négatif, qui est orientée vers l'extérieur de la première partie de tige 1.

La deuxième partie de tige 2 est en forme de double piston, c'est-à-dire une pièce allongée présentant des extrémités opposées formant chacune une tête de piston. Cette deuxième partie 2 porte un second jeu d'aimants permanents 2a qui est intégré à cette deuxième partie 2. Ces aimants sont régulièrement disposés tout autour de cette seconde partie 2. Chacun de ces aimants présente une polarité dudit premier signe qui est orientée vers l'extérieur de la deuxième partie 2 et une polarité dudit second signe qui est orientée vers l'intérieur de cette deuxième partie 2.

Ainsi, lorsque la deuxième partie de tige 2 est insérée dans la première partie 1 pour y coulisser, les aimants des premier et second jeux 1a, 2a ont leurs pôles qui s'opposent et qui forcent les parties 1 et 2 à rester éloignées l'une de l'autre et séparées par un espace annulaire E1. On a ainsi un guidage linéaire sans frottement entre ces deux parties 1, 2.

Dans chacun des modes de réalisation des figures 1h, 2a et 3a, le guidage linéaire entre parties de tige adjacentes est réalisé par le même principe de forces de répulsion magnétique. Ainsi, chaque partie de tige porte au moins un jeu d'aimants permanents prévu pour générer des forces de répulsion vis-à-vis d'un autre jeu d'aimants permanents porté par une autre des parties de la tige.

Comme on le voit en particulier sur la figure 10a coupe A-A, la figure 10b coupe B'-B', la figure 2b coupe E-E, la figure 2e coupe F-F, certains des aimants permanents des jeux d'aimants permanents qui sont agencés pour générer les forces de répulsions afin de centrer les parties de tige les unes par rapport aux autres selon l'axe X-X, sont disposés en étoiles dont les branches s'étendent autour de l'axe principal de symétrie X-X. Ainsi, un aimant d'un jeu donné peut se trouver entre deux branches d'étoile formées par des aimants d'un autre jeu donné d'aimants permanents. Dans cette disposition les forces de répulsion entre les aimants de ces jeux sont telles qu'elles forcent l'aimant placé entre ces branches à rester dans une position stable et à distance des aimants qui forment ces deux branches. On a ainsi un couple magnétique de rappel s'opposant au pivotement des parties de tige l'une par rapport à l'autre. Ce guidage magnétique sans contact entre les parties de tige s'oppose à la torsion de la tige selon son axe principal de symétrie X-X.

Sur les coupes A-A, B'-B', E-E et F-F des figures 10a, 10b, 2b et 2e, on voit que les aimants permanents des jeu d'aimants ont leurs axes polaires principaux Xp qui sont orientés dans des plans perpendiculaires à l'axe principal de symétrie X-X, X'-X' de la tige télescopique. Afin de générer un couple magnétique s'opposant au pivotement relatif des parties de tige tout en maintenant ces parties à distance l'une de l'autre, ces axes Xp peuvent au choix être orientés de manière sensiblement radiale ou sensiblement tangentielle vis-à-vis de l'axe de symétrie de la tige.

Ainsi, le premier espace E1 entre les première et deuxième parties de la tige 1, 2 est maintenu grâce aux forces de répulsion magnétique exercées entre les premier et second jeux d'aimants 1a, 2a. Cet espace E1 limite le risque de contact mécanique entre ces première et deuxième parties. Le besoin de lubrification entre les parties de tige peut ainsi être limité et la masse et l'encombrement de la tige peuvent être réduits.

Cet espace annulaire E1 s'étend en face de toute la zone de vis-à-vis entre les première et deuxième parties de la tige télescopique. Lorsqu'observé selon l'axe principal de symétrie de la tige, cet espace E1 est en forme d'étoile.

Selon un autre aspect de l'invention utilisé dans chacun des modes de réalisation présentés aux figures 1h, 2a et 3a de l'invention, certaines au moins des parties de tige portent un électro-aimant adapté à générer une force de répulsion axiale qui s'oppose au rapprochement relatif entre deux parties de tige adjacentes entre elles et selon une direction de rapprochement parallèle audit axe principal de symétrie de la tige X-X, X'-X', X"-X".

Un tel électroaimant 1b, 1b', 1b", 2b, 2b', 2b" peut être fixé sur une tige pour repousser magnétiquement, selon l'axe principal de symétrie X-X, X'-X', X"-X", des aimants permanents assemblés sur une autre tige.

Comme on le voit en particulier sur les figures 1h, 2a, 3a, on peut avoir un électroaimant 1b fixé à une extrémité d'une partie de tige 1 et un autre électroaimant 2b fixé à une extrémité d'une autre partie de tige, ces électroaimants formant une paire d'électroaimants placée en vis-à-vis l'un de l'autre pour générer des efforts de répulsion axial ou d'attraction entre ces électroaimants.

Une même tige d'atterrisseur peut comporter plusieurs paires d'électroaimants, chacune de ces paires étant adaptée à générer une force de répulsion axiale et/ou d'attraction axiale pour contrôler l'extension et/ou la rétraction de la tige ainsi qu'éventuellement réguler les lois d'amortissement lorsque la tige est soumise aux efforts de compression axiale.

Ainsi, dans le mode de la figure 1h, on a :
- une première paire d'électroaimants formée par l'électroaimant 1b porté par la première partie de tige 1 et par l'électroaimant 2b porté à une extrémité de la seconde partie de tige 2 ;
- une deuxième paire d'électroaimants 2c et 4b formée entre une extrémité de la deuxième partie de tige 2 et une extrémité de la quatrième partie de tige 4.

La présence de deux paires d'électroaimants pour générer des efforts magnétiques selon l'axe principal de symétrie de la tige permet une redondance de la fonction d'amortissement contrôlé par forces électromagnétiques.

Dans le mode de la figure 2a, chaque extrémité des parties coulissantes de la tige porte un électroaimant, ces électroaimants formant ainsi plusieurs paires d'électroaimants, en l'occurrence 3 paires, qui permettent chacune d'agir sur l'extension et/ou la rétraction de la tige entre ses extrémités 30', 31'.

Dans le mode de réalisation de la figure 3a, on a un premier électroaimant fixe 0b" assemblé sur une partie fixe axialement de la tige 0", un second électroaimant 1b" monté à une extrémité de la première partie de tige 1" distale de l'électroaimant 0b", un troisième électroaimant 2b" monté à une extrémité de la deuxième partie de tige 2" distale de l'électroaimant 1b".

Ces électroaimants 0b", 1b", 2b" sont agencés pour générer deux à deux des efforts de répulsion ou d'attraction pour commander l'extension ou la rétraction de tige.

Idéalement, dans chacun des modes des figures 1h, 2a, 3a, des aimants permanents de poussée axiale peuvent être assemblés à une extrémité de la première partie de tige 1, 1', 1" et/ou à une extrémité de la deuxième partie de tige 2, 2', 2" et ainsi de suite, de manière à générer une seconde force de répulsion axiale qui s'oppose au rapprochement relatif entre les première et deuxième parties de tige. Comme ces aimants sont permanents, cette seconde force peut être générée y compris en absence d'alimentation en électricité du premier électro-aimant 1b, 1b', 1b" ou du second électro-aimant 2b, 2b', 2b". Cette seconde force de répulsion est une sécurité en cas de panne électrique pour permettre de conserver une distance axiale minimale entre les première et deuxième parties de la tige télescopique et ainsi permettre un amortissement minimum. Contrairement à la première force de répulsion axiale générée par les électroaimants et qui peut être pilotée activement, cette seconde force augmente uniquement en réaction à la rétractation de la tige télescopique.

Il est aussi à noter que certains au moins des électroaimants agencés pour commander l'extension et/ou la rétraction de la tige peuvent comporter des pôles orientés radialement pour pouvoir générer des efforts de répulsion radiaux pour par exemple s'opposer à une risque de mise en contact radial de parties de tiges qui coulissent l'une dans l'autre. De tels pôles, ici positifs, sont symbolisés sur la figure 1b, au niveau de l'extrémité 2c de la tige 2.

Comme illustré à la figure 3a, des aimants permanents 40", 42", 43" peuvent être fixés sur un carter fixe 41" entourant la tige. Ces aimants permanents peuvent par exemple interagir avec les pôles des électroaimants qui sont orientés radialement de manière à générer lesdits efforts de répulsion radiaux.

Comme illustré sur le mode de réalisation de la figure 3a, la tige d'atterrisseur peut aussi comporter au moins un, en l'occurrence deux électro-aimants de commande de rotation 10", 20". Chacun de ces électroaimants commandent la rotation selon ledit axe principal de symétrie X"-X" de certaines au moins des parties de la tige 1", 2", 3", 4" par rapport aux moyens d'attachement de la tige à la structure principale de l'aéronef. Comme on le voit sur la figure 3b, un électroaimant de commande en rotation comporte plusieurs pôles magnétiques agencés le long d'une surface annulaire S" centrée autour de l'axe de symétrie de tige X"-X". Ces pôles magnétiques sont disposés en alternance de signe le long de la surface annulaire S".

Au moins un jeu d'aimants permanents de rotation 40" est agencé pour coopérer au moins un des électro-aimants de commande de rotation 10" pour commander ladite rotation.

D'autres jeux d'aimants permanents de rotation 42", 43" peuvent aussi être assemblés de loin en loin le long du carter fixe 41".

Comme indiqué précédemment, chacun de ces jeux d'aimants permanents de rotation 40", 42", 43" est ici assemblé le long du carter fixe 41". Chacun de ces jeux d'aimants permanents de rotation 40", 42", 43" forme une alternance de polarités s'étendant le long de la périphérie intérieure du carter fixe 41".

Ainsi, certains au moins des pôles positionnés le long des surfaces annulaires S" des électroaimants de commande en rotation 10" ou 20" peuvent être attirés ou repoussés vers des pôles magnétiques des jeux d'aimants permanents de rotation 40", 42", 43". En variant chacune des alimentations électriques des électroaimants de commande de rotation 10", 20", on peut ainsi contrôler la rotation des parties de tige autour de l'axe de symétrie X"-X" et lorsque nécessaire immobiliser la tige dans une orientation donnée pour diriger l'aéronef sur le sol.

Bien que l'usage d'électroaimants de commande de rotation 10", 20" soit décrit dans le seul mode de réalisation de la figure 3a, il va de soi que de tels électroaimants de commande en rotation et aimants permanents de commande en rotation peuvent être combinés à chacun des autres modes de réalisation de l'invention pour actionner la rotation selon l'axe de symétrie de parties de la tige par rapport à la structure de l'aéronef.

L'alimentation électrique des différents électroaimants portés par les tiges coulissantes peut être réalisée via des balais connecteurs glissants le long de pistes conductrices s'étendant le long de la tige. Ces pistes conductrices peuvent être formées à la surface de certaines au moins des parties de la tige et peuvent s'étendre le long de cette tige et/ou autour de la tige. Certaines au moins de ces pistes conductrices peuvent être formées par impression à l'aide d'une encre conductrice ou par dépôt électrolytique d'un matériau conducteur électriquement, ou par une couche de grains de matériau conducteur projetés à grande vitesse.

On note que pour améliorer le transfert d'électricité, certains des matériaux conducteurs utilisés peuvent être des supraconducteurs.

L'invention n'est bien sûr pas limitée à ce qui vient d'être décrit, mais englobe toute variante entrant dans le cadre défini par les revendications ainsi que d'autres variantes.

En particulier, un électro-aimant de commande de rotation 10", 20" du type prédéfini peut être utilisé pour orienter une tige d'atterrisseur conventionnelle dont le guidage linéaire des parties de tige est réalisé non pas via des forces de répulsion magnétique mais via des moyens conventionnelles par frottement sur des portées de paliers mécaniques répartis le long de la tige.

Il est à noter que bien que l'électroaimant de commande en rotation soit décrit comme porté par la tige, il est aussi possible qu'il soit porté par le carter fixe. Dans ce mode de réalisation, un jeu d'aimants permanents de rotation peut être agencé pour coopérer avec ledit au moins un électro-aimant de commande de rotation porté par le carter fixe et pour ainsi commander la rotation de la tige.

Ce mode permet de générer les efforts de rotation de tige via les aimants implantés directement dans la tige et on peut ainsi se passer de moyens de transmission d'efforts mécaniques entre un actionneur électromécanique externe à la tige et la partie de la tige à actionner.

De même bien que dans les modes de réalisation décrits ci-avant on a toujours un premier jeu d'aimants permanents assemblé à la première partie tige et un jeu d'aimants permanents assemblé sur la deuxième partie de tige, il est possible qu'en plus du deuxième jeu d'aimants permanents ou en remplacement de ce deuxième jeu d'aimants permanents on ait au moins un électroaimant de répulsion radiale agencés pour exercer, lorsqu'alimenté en électricité, une force de répulsion radiale vis-à-vis des aimants du premier jeu d'aimants permanents afin de réaliser le guidage en coulissement entre les première et deuxième parties de la tige tout en maintenant l'espace annulaire entre les première et deuxième parties de la tige.

Cette solution est applicable pour guider en coulissement toute partie de la tige vis-à-vis d'une autre partie de la tige.

Par ailleurs, il est à noter que certains au moins des aimants permanents ou électroaimants décrits dans les différents modes de réalisation de l'invention peuvent être assemblés à la partie de tige correspondante ou au carter correspondant soit en y étant inséré, soit via un harnais.

## Revendications

1. Atterrisseur d'aéronef comprenant une tige linéaire télescopique (0, 0', 0") s'étendant entre une première extrémité de tige (30, 30', 30") comprenant des moyens d'attachement de la tige à une structure principale de l'aéronef et une seconde extrémité de tige (31, 31', 31") portant un axe de roues (5, 5') de l'atterrisseur, la tige linéaire télescopique (0, 0', 0") comprenant des parties de la tige (1, 2, 3, 4, 1', 2', 3', 4', 1", 2", 3", 4") adaptées à coulisser les unes par rapport aux autres le long d'un axe principal de symétrie de la tige (X-X, X'-X', X"-X") afin de d'étendre ou rétracter la tige télescopique, l'atterrisseur comprenant en outre :
- un premier jeu d'aimants permanents (1a, 1a', 1a") fixés à une première desdites parties de la tige (1, 1', 1");
- un deuxième jeu d'aimants permanents (2a, 2a', 2a") fixés à une deuxième desdites parties de la tige (2, 2', 2");
les premier et second jeux d'aimants permanents (1a, 1a', 1a", 2a, 2a', 2a") étant agencés de manière à générer une force de répulsion magnétique entre la première partie de la tige (1, 1', 1") et la deuxième partie de la tige (2, 2', 2") et de manière à maintenir un premier espace (E1) annulaire s'étendant autour de l'une des première ou deuxième parties de tige et situé entre la première partie de la tige et la deuxième partie de la tige ;
l'atterrisseur étant **caractérisé en ce que**:
certains au moins des aimants du premier jeu d'aimants permanents (1a, 1a', 1a") :
- sont disposés en vis-à-vis de certains au moins des aimants du deuxième jeu d'aimants permanents (2a, 2a', 2a") de manière à générer un couple magnétique s'opposant au pivotement relatif, selon l'axe principal de symétrie (X-X, X'-X', X"-X"), de la première partie de la tige (1, 1', 1") par rapport à la deuxième partie de la tige (2, 2', 2") ; et
- forment des branches d'une étoile s'étendant autour de l'axe principal de symétrie (X-X, X'-X', X"-X") ; et
certains au moins des aimants du deuxième jeu d'aimants permanents (2a, 2a', 2a") sont disposés entre certaines des branches de l'étoile pour générer des forces de répulsion magnétique vis-à-vis d'aimants du premier jeu d'aimants permanents qui forment des branches de l'étoile.

2. Atterrisseur selon la revendication 1, dans lequel chacun des aimants du premier jeu d'aimants permanents (1a, 1a', 1a") est intégré dans la première partie de la tige (1, 1', 1") et chacun des aimants du deuxième jeu d'aimants permanents (2a, 2a', 2a") est intégré dans la deuxième partie de la tige (2, 2', 2").

3. Atterrisseur selon l'une quelconque des revendications précédentes, dans lequel la tige linéaire télescopique comprend en outre au moins un premier électro-aimant (1b, 1b', 1b") adapté à générer une première force de répulsion axiale qui s'oppose au rapprochement relatif entre les première et deuxième parties de tige (1, 2, 1', 2', 1", 2") selon une direction parallèle audit axe principal de symétrie de la tige (X-X, X'-X', X"-X").

4. Atterrisseur selon la revendication 3, comprenant en outre des moyens d'alimentation en électricité dudit au moins un premier électroaimant, ces moyens d'alimentation étant agencés pour faire varier la puissance d'alimentation en électricité dudit au moins un premier électro-aimant de manière à commander le coulissement relatif entre lesdites première et deuxième parties de tige.

5. Atterrisseur selon la revendication 4, dans lequel ledit moyen d'alimentation est adapté pour commander au moins un premier électro-aimant (1b, 1b', 1b") :
- l'extension ou la rétraction de la tige linéaire télescopique par coulissement relatif entre lesdites première et deuxième parties de tige ; et
- la variation de caractéristiques d'amortissement du déplacement relatif entre lesdites première et deuxième parties de tige.

6. Atterrisseur selon l'une quelconque des revendications 4 ou 5, dans lequel ledit au moins un premier électro-aimant (1b, 1b', 1b") est assemblé à une extrémité de la première partie de tige (1, 1', 1"), l'atterrisseur comportant en outre un second électro-aimant (2b, 2b', 2b") assemblé à une extrémité de la deuxième partie de tige (2, 2', 2"), ces premier et second électroaimants étant placés en vis-à-vis l'un de l'autre et étant adaptés à générer ensemble ladite première force de répulsion axiale qui s'oppose au rapprochement relatif entre les première et deuxième parties de tige.

7. Atterrisseur selon l'une quelconque des revendications précédentes, comprenant au moins un électro-aimant de commande de rotation (10", 20") agencé pour commander la rotation selon ledit axe principal de symétrie (X"-X") de certaines au moins des première et deuxième parties de la tige (1", 2", 3" , 4") par rapport aux moyens d'attachement de la tige à la structure principale de l'aéronef.

8. Atterrisseur selon la revendication 7, dans lequel un jeu d'aimants permanents de rotation (40") est agencé pour coopérer avec ledit au moins un électro-aimant de commande de rotation (10") pour commander ladite rotation, ce jeu d'aimants permanents de rotation pouvant être disposé en vis-à-vis de pôle magnétiques dudit au moins un électro-aimant de commande de rotation (10") et pouvant être assemblé à un carter fixe (41") entourant la tige télescopique (0") sur au moins une partie de sa longueur.

## Patentansprüche

1. Luftfahrzeugfahrwerk, umfassend eine lineare Teleskopstange (0, 0', 0"), die sich zwischen einem ersten Stangenende (30, 30', 30"), das Befestigungsmittel zum Befestigen der Stange an einer Hauptstruktur des Luftfahrzeugs umfasst, und einem zweiten Stangenende (31, 31', 31") erstreckt, das eine Radachse (5, 5') des Fahrwerks trägt, wobei die lineare Teleskopstange (0, 0', 0") Stangenteile (1, 2, 3, 4, 1', 2', 3', 4', 1", 2", 3", 4") umfasst, die angepasst sind, um sich relativ zueinander entlang einer Hauptsymmetrieachse (X-X, X'-X', X"-X") der Stange zu verschieben, um die Teleskopstange auszufahren oder einzufahren, wobei das Fahrwerk ferner umfasst:
- einen ersten Satz Permanentmagneten (1a, 1a', 1a"), die an einem ersten der genannten Stangenteile (1, 1', 1") befestigt sind;
- einen zweiten Satz Permanentmagneten (2a, 2a', 2a"), die an einem zweiten der genannten Stangenteile (2, 2', 2") befestigt sind;
wobei der erste und der zweite Satz Permanentmagneten (1a, 1a', 1a", 2a, 2a', 2a") derart ausgebildet sind, dass sie eine magnetische Abstoßungskraft zwischen dem ersten Stangenteil (1, 1', 1") und dem zweiten Stangenteil (2, 2', 2") erzeugen, sowie derart, dass ein erster ringförmiger Raum (E1) aufrechterhalten wird, der sich um einen Teil des ersten oder des zweiten Stangenteils herum erstreckt und sich zwischen dem ersten Stangenteil und dem zweiten Stangenteil befindet;
wobei das Fahrwerk **dadurch gekennzeichnet ist, dass**: zumindest einige der Magneten des ersten Satzes Permanentmagneten (1a, 1a', 1a")
- gegenüber zumindest einigen der Magneten des zweiten Satzes Permanentmagneten (2a, 2a', 2a") derart angeordnet sind, dass ein magnetisches Moment erzeugt wird, das sich der relativen Drehung, um die Hauptsymmetrieachse (X-X, X'-X', X"-X") des ersten Stangenteils (1, 1',1") in Bezug auf den zweiten Stangenteil (2, 2', 2") widersetzt; und
- Zweige eines Sterns bilden, der sich um die Hauptsymmetrieachse (X-X, X'-X', X"-X") erstreckt; und
zumindest einige der Magneten des zweiten Satzes Permanentmagneten (2a, 2a', 2a") zwischen einigen der Zweige des Sterns angeordnet sind, um magnetische Abstoßungskräfte gegenüber Magneten des ersten Satzes Permanentmagneten zu erzeugen, die Zweige des Sterns bilden.

2. Fahrwerk nach Anspruch 1, bei dem jeder der Magneten des ersten Satzes Permanentmagneten (1a, 1a', 1a") in den ersten Stangenteil (1, 1', 1") integriert ist und jeder der Magneten des zweiten Satzes Permanentmagneten (2a, 2a', 2a") in den zweiten Stangenteil (2, 2', 2") integriert ist.

3. Fahrwerk nach einem der vorhergehenden Ansprüche, bei dem die lineare Teleskopstange ferner mindestens einen ersten Elektromagneten (1b, 1b', 1b") umfasst, der geeignet ist, eine erste axiale Abstoßungskraft zu erzeugen, die sich dem relativen Annähern zwischen dem ersten und dem zweiten Stangenteil (1, 2, 1', 2', 1", 2") gemäß einer Richtung parallel zur genannten Hauptsymmetrieachse (X-X, X'-X', X"-X") der Stange widersetzt.

4. Fahrwerk nach Anspruch 3, ferner umfassend Stromversorgungsmittel zur Versorgung des genannten mindestens einen ersten Elektromagneten, wobei diese Versorgungsmittel ausgebildet sind, die Stromversorgungsleistung des genannten mindestens einen ersten Elektromagneten derart zu ändern, dass das relative Verschieben zwischen dem genannten ersten und zweiten Stangenteil gesteuert wird.

5. Fahrwerk nach Anspruch 4, bei dem die genannten Versorgungsmittel angepasst sind, um mindestens einen ersten Elektromagneten (1b, 1b', 1b") zu steuern:
- das Ausfahren oder das Einfahren der linearen Teleskopstange durch relatives Verschieben zwischen dem genannten ersten und zweiten Stangenteil; und
- das Verändern der Dämpfungseigenschaften der relativen Bewegung zwischen dem genannten ersten und dem genannten zweiten Stangenteil.

6. Fahrwerk nach einem der Ansprüche 4 oder 5, bei dem der genannte mindestens eine erste Elektromagnet (1b, 1b', 1b") an einem Ende des ersten Stangenteils (1, 1', 1") angefügt ist, wobei das Fahrwerk ferner einen zweiten Elektromagneten (2b, 2b', 2b") umfasst, der an einem Ende des zweiten Stangenteils (2, 2', 2") angefügt ist, wobei dieser erste und zweite Elektromagnet einander gegenüberliegend platziert und geeignet sind, zusammen die genannte erste axiale Abstoßungskraft zu erzeugen, die sich dem relativen Annähern zwischen dem ersten und dem zweiten Stangenteil widersetzt.

7. Fahrwerk nach einem der vorhergehenden Ansprüche, umfassend mindestens einen Rotationssteuerungs-Elektromagneten (10", 20"), der ausgebildet ist, um die Rotation um die Hauptsymmetrieachse (X"-X") zumindest einiger der ersten und zweiten Stangenteile (1", 2", 3", 4") in Bezug auf die Befestigungsmittel der Stange an der Hauptstruktur des Flugzeugs zu steuern.

8. Fahrwerk nach Anspruch 7, bei dem ein Satz von Rotationspermanentmagneten (40") so ausgebildet ist, um mit dem genannten mindestens einen Rotationssteuerungs-Elektromagneten (10") zusammenzuwirken, um die genannte Rotation zu steuern, wobei dieser Satz Rotationspermanentmagneten gegenüber den magnetischen Polen des genannten mindestens einen Rotationssteuerungs-Elektromagneten (10") angeordnet werden kann und an einem ortsfesten Gehäuse (41"), das die Teleskopstange (0") über mindestens einen Teil ihrer Länge umgibt, montiert werden kann.

## Claims

1. An aircraft undercarriage including a telescopic linear rod (0, 0', 0") extending between a first rod end (30, 30', 30") having means for attaching the rod to a main structure of the aircraft and a second rod end (31, 31', 31") carrying a wheel axle (5, 5') of the undercarriage, the telescopic linear rod (0, 0', 0") comprising rod portions (1, 2, 3, 4, 1', 2', 3', 4', 1", 2", 3", 4") adapted to slide in one another along a main axis of symmetry (X-X, X'-X', X"-X") of the rod in order to extend or retract the telescopic rod, the undercarriage further comprising:
• a first permanent magnet set (1a, 1a', 1a") fastened to a first of said rod portions (1, 1', 1"); and
• a second permanent magnet set (2a, 2a', 2a") fastened to a second of said rod portions (2, 2', 2");
the first and second permanent magnet sets (1a, 1a', 1a", 2a, 2a', 2a") being arranged so as to generate a magnetic repulsion force between the first rod portion (1, 1', 1") and the second rod portion (2, 2', 2") and in such a manner as to maintain a first annular space (E1) extending around one of the first or second rod portions and situated between the first rod portion and the second rod portion, the undercarriage being **characterized in that** :
at least some of the magnets of the first permanent magnet set (1a, 1a', 1a") are :
- arranged facing at least some of the magnets of the second permanent magnet set (2a, 2a', 2a") so as to generate magnetic torque opposing relative pivoting about the main axis of symmetry (X-X, X'-X', X"-X") of the first rod portion (1, 1', 1") relative to the second rod portion (2, 2', 2"); and
- form branches of a star extending around the main axis of symmetry (X-X, X'-X', X"-X"); and
at least some of the magnets of the second permanent magnet set (2a, 2a', 2a") are arranged between some of the branches of the star to generate magnetic repulsion forces against the magnets of the first permanent magnet set forming the branches of the star.

2. The undercarriage according to claim 1, wherein each of the magnets of the first permanent magnet set (1a, 1a', 1a") is incorporated in the first rod portion (1, 1', 1") and each of the magnets of the second permanent magnet set (2a, 2a', 2a") is incorporated in the second rod portion (2, 2', 2").

3. The undercarriage according to any one of the preceding claims, wherein the telescopic linear rod further comprises at least one first electromagnet (1b, 1b', 1b") adapted to generate a first axial repulsion force opposing relative approach between the first and second rod portions (1, 2, 1', 2', 1", 2") along a direction parallel to said main axis of symmetry (X-X, X'-X', X"-X") of the rod.

4. The undercarriage according to claim 3, further comprising electrical power supply means for powering said at least one first electromagnet, the power supply means being arranged to vary the electrical power supplied to said at least one first electromagnet so as to control relative sliding between said first and second rod portions.

5. The undercarriage according to claim 4, wherein said power supply means are adapted to control at least one first electromagnet (1b, 1b', 1b"):
• to extend or retract the telescopic linear rod by relative sliding between said first and second rod portions; and
• to vary the damping characteristics of the relative movement between said first and second rod portions.

6. The undercarriage according to any of claims 4 or 5, wherein said at least one first electromagnet (1b, 1b', 1b") is assembled to one end of the first rod portion (1, 1', 1"), and the undercarriage further comprises a second electromagnet (2b, 2b', 2b") assembled to one end of the second rod portion (2, 2', 2"), these first and second electromagnets being placed facing each other and being adapted to act together to generate said axial repulsion force opposing said relative approach between the first and second rod portions.

7. An undercarriage according to claim 1, including at least one rotation-control electromagnet (10", 20") arranged to control rotation about said main axis of symmetry (X"-X") of at least some of the first and second rod portions (1", 2", 3", 4") relative to the means attaching the rod to the main structure of the aircraft.

8. An undercarriage according to claim 7, wherein a set of rotation permanent magnets (40") is arranged to cooperate with said at least one rotation-control electromagnet (10") to control said rotation, said set of rotation permanent magnets being placeable facing magnetic poles of said at least one rotation-control electromagnet (10") and being capable of being assembled to a stationary casing (41") surrounding the telescopic rod (0") over at least a fraction of its length.
